# EUROPEAN PATENT APPLICATION

(11) **EP 4 635 811 A1**
(43) Date of publication of application: **22.10.2025**
(21) Application number: 24915842.9
(22) Date of filing: 05.02.2024
(51) Int. Cl.: B60W 20/10

(54) **TORQUE CONTROL METHOD AND APPARATUS FOR HYBRID VEHICLE, VEHICLE, AND STORAGE MEDIUM**

(30) Priority: 30.01.2024 CN 202410137268
(71) Applicant: Chongqing Changan Automobile Co., Ltd., Chongqing 400023 (CN)
(72) Inventor: WANG, Xuan, Chongqing 400023 (CN); HU, Xianli, Chongqing 400023 (CN); FU, Xuehai, Chongqing 400023 (CN); CHEN, Xuping, Chongqing 400023 (CN)
(74) Representative: Keller Schneider Patent- und Markenanwälte AG
(86) International application number: PCT/CN2024/076132
(87) International publication number: WO 2025/161056

(57) **Abstract**

The present disclosure relates to the technical field of vehicles, and disclosed are a method and apparatus for controlling a torque of a hybrid electric vehicle, a vehicle, and a storage medium. The method includes: obtaining working condition parameters of power sources, where the power sources include an engine, a P1 motor and a P3 motor; calculating, when a target power source with a working condition parameter satisfying corresponding preset detection conditions exists in the power sources, a target actual torque of the target power source; obtaining a current output torque of the target power source; obtaining a torque deviation of the target power source at a current operating rotational speed and the current output torque based on a difference between the target actual torque and the current output torque; storing the torque deviation in a torque precision look-up table corresponding to the target power source, where the torque precision look-up table is configured for storing torque deviations of the target power source at different operating rotational speeds and torques; and controlling a torque of the target power source based on the torque precision look-up table. The present disclosure can solve a problem that torque control precision of the power sources of a P13-configuration hybrid electric vehicle is low.

## Description

### TECHNICAL FIELD

The present disclosure relates to the technical field of vehicles, in particular to a method and apparatus for controlling a torque of a hybrid electric vehicle, a vehicle, and a storage medium.

### BACKGROUND

In a hybrid electric vehicle using a P13 configuration, a torque of three power sources of an engine, a P1 motor and a P3 motor is an important torque component of the P13-configuration hybrid electric vehicle. By calculating torque control precision of the engine, the P1 motor and the P3 motor, an actual service power of a battery can be calculated indirectly and accurately, so the actual service power of the battery is guaranteed to always fall within a safe power boundary range of the battery, and then safety performance of the battery is improved. It can be seen that improving the torque control precision of the engine, the P1 motor and the P3 motor is crucial to control accuracy on a state of charge (SOC) of the battery.

However, due to influences of factors such as manufacturing error of the power sources, errors of a torque model, and changes in boundary conditions of the whole vehicle, there are some deviations between an actual torque and a theoretical control torque of the three power sources of the engine, the P1 motor and the P3 motor on the whole vehicle, causing low torque control precision of the power sources.

### SUMMARY OF THE INVENTION

In view of this, the present disclosure provides a method and apparatus for controlling a torque of a hybrid electric vehicle, a vehicle, and a storage medium, so as to solve a problem that torque control precision of the power sources of a P13-configuration hybrid electric vehicle is low.

In a first aspect, the present disclosure provides a method for controlling a torque of a hybrid electric vehicle. The method includes:
obtaining working condition parameters of power sources, where the power sources include an engine, a P1 motor and a P3 motor;
calculating, when a target power source with a working condition parameter satisfying corresponding preset detection conditions exists in the power sources, a target actual torque of the target power source;
obtaining a current output torque fed back by the target power source;
obtaining a torque deviation of the target power source at a current operating rotational speed and the current output torque based on a difference between the target actual torque and the current output torque;
storing the torque deviation in a torque precision look-up table corresponding to the target power source, where the torque precision look-up table is configured for storing torque deviations of the target power source at different operating rotational speeds and torques; and
controlling a torque of the target power source based on the torque precision look-up table.

According to the above technical means, when a working condition parameter of a power source of the P13-configuration hybrid electric vehicle satisfies corresponding preset detection conditions, a target actual torque of the power source is calculated, such that based on a difference between the target actual torque and current output torque fed back by the power source, a torque deviation of the target power source at a current operating rotational speed and the current output torque is obtained. The obtained torque deviation is stored in a torque precision look-up table corresponding to the power source. Accordingly, when torque control is performed on the power source, the torque of the power source can be corrected based on the torque precision look-up table corresponding to the power source, so as to improve torque control precision of the power source of the P13-configuration hybrid electric vehicle, and improve driving robustness and smoothness of the hybrid electric vehicle.

In an optional embodiment, the calculating, when a target power source with a working condition parameter satisfying corresponding preset detection conditions exists in the power sources, a target actual torque of the target power source includes:
obtaining a first output power of a power supply device and a first electric power of a target electric device when a working condition parameter of the P3 motor satisfies corresponding preset detection conditions and the P1 motor is in an inactive state;
obtaining a first motor power of the P3 motor based on a difference between the first output power and the first electric power;
obtaining a first motor efficiency of the P3 motor and a first operating rotational speed of the P3 motor; and
calculating a target actual torque of the P3 motor based on the first motor power, the first motor efficiency, and the first operating rotational speed.

According to the above technical means, the first output power of the power supply device and the first electric power of the target electric device are obtained only when the working condition parameter of the P3 motor satisfies the corresponding preset detection conditions and the P1 motor is in the inactive state. Thus the target actual torque of the P3 motor is obtained by using a power conservation principle and a torque balance principle. Accordingly, an influence of a working boundary condition of the P3 motor on the target actual torque of the P3 motor can be avoided. Moreover, an influence of a torque control error of the P1 motor on the P3 motor can be avoided. Thus accuracy of the target actual torque of the P3 motor is improved, and accuracy of the torque deviation corresponding to the P3 motor is further improved in a subsequent torque deviation calculating process.

In an optional embodiment, the calculating, when a target power source with a working condition parameter satisfying corresponding preset detection conditions exists in the power sources, a target actual torque of the target power source further includes:
obtaining a second output power of a power supply device and a second electric power of a target electric device when a working condition parameter of the P1 motor satisfies corresponding preset detection conditions;
obtaining a total motor power based on a difference between the second output power and the second electric power;
obtaining a second motor power of the P3 motor;
obtaining a third motor power of the P1 motor based on a difference between the total motor power and the second motor power;
obtaining a second motor efficiency of the P1 motor and a second operating rotational speed of the P1 motor; and
calculating a target actual torque of the P1 motor based on the third motor power, the second motor efficiency, and the second operating rotational speed.

According to the above technical means, the second output power of the power supply device and the second electric power of the target electric device are obtained only when the working condition parameter of the P1 motor satisfies the corresponding preset detection conditions. Thus the target actual torque of the P1 motor is obtained by using a power conservation principle and a torque balance principle. Accordingly, an influence of a working boundary condition of the P1 motor on the target actual torque of the P1 motor can be avoided. Thus accuracy of the target actual torque of the P1 motor is improved, and accuracy of the torque deviation corresponding to the P1 motor is further improved in a subsequent torque deviation calculating process.

In an optional embodiment, the obtaining a second motor power of the P3 motor includes:
obtaining a first output torque fed back by the P3 motor and a third operating rotational speed of the P3 motor;
querying a first torque deviation of the P3 motor from a torque precision look-up table corresponding to the P3 motor based on the first output torque and the third operating rotational speed;
obtaining a first actual torque of the P3 motor based on a sum of the first output torque and the first torque deviation;
obtaining a third motor efficiency of the P3 motor; and
calculating the second motor power based on the first actual torque, the third motor efficiency, and the third operating rotational speed.

According to the above technical means, after the first output torque of the P3 motor is obtained, the corresponding first torque deviation is queried from the torque precision look-up table corresponding to the P3 motor according to the current first output torque and the third operating rotational speed of the P3 motor, such that the first output torque of the P3 motor is corrected. Further, the second motor power of the P3 motor is calculated according to the corrected first actual torque of the P3 motor, so as to be configured for calculating the target actual torque of the P1 motor. Accordingly, an influence of a torque control error of the P3 motor on the target actual torque of the P1 motor can be avoided, and accuracy of the target actual torque of the P1 motor can be further improved.

In an optional embodiment, the calculating, when a target power source with a working condition parameter satisfying corresponding preset detection conditions exists in the power sources, a target actual torque of the target power source further includes:
obtaining a second output torque fed back by the P1 motor and a fourth operating rotational speed of the P1 motor when a working condition parameter of the engine satisfies corresponding preset detection conditions;
querying a second torque deviation of the P1 motor from a torque precision look-up table corresponding to the P1 motor based on the second output torque and the fourth operating rotational speed;
obtaining a second actual torque of the P1 motor based on a sum of the second output torque and the second torque deviation; and
calculating a target actual torque of the engine based on a speed ratio of the P1 motor to the engine and the second actual torque.

According to the above technical means, the second output torque fed back by the P1 motor and the fourth operating rotational speed of the P1 motor are obtained only when the working condition parameter of the engine satisfies the corresponding preset detection conditions. Thus, the target actual torque of engine is obtained by using a torque correlation between the P1 motor and the engine. Accordingly, an influence of a working boundary condition of the engine on the target actual torque of the engine can be avoided. Thus accuracy of the target actual torque of the engine is improved, and accuracy of the torque deviation corresponding to the engine is further improved in a subsequent torque deviation calculating process.

In an optional embodiment, the storing the torque deviation in a torque precision look-up table corresponding to the target power source includes:
obtaining a continuous duration for which the target power source satisfies the corresponding preset detection conditions; and
storing the torque deviation in the torque precision look-up table corresponding to the target power source when the continuous duration is greater than a target detection duration.

According to the above technical means, the torque deviation is stored in the torque precision look-up table corresponding to the target power source only when the continuous duration which for the target power source satisfies the corresponding preset detection conditions is greater than the target detection duration. Thus an influence when the target power source changes temporarily can be avoided. Accuracy of the torque deviations in the torque precision look-up table corresponding to the target power source can be further guaranteed. The torque control precision of the target power source can be further improved.

In an optional embodiment, preset detection conditions corresponding to the P3 motor include at least one of the following: an operating temperature of the P3 motor being within a first preset temperature range; a voltage of the P3 motor being within a first preset voltage range; a current of the P3 motor being within a first preset current range; an operating rotational speed of the P3 motor being within a first preset rotation speed range; and an output torque fed back by the P3 motor being within a first preset torque range.

According to the above technical means, at least one of the operating temperature of the P3 motor, the voltage of the P3 motor, the current of the P3 motor, the operating rotational speed of the P3 motor, and the output torque fed back by the P3 motor is limited by the preset detection conditions corresponding to the P3 motor. Thus it can be avoided that the torque deviation of the P3 motor is detected under boundary conditions of an operating temperature boundary, a voltage boundary, a current boundary, an operating rotational speed boundary, or an output torque boundary of the P3 motor, such that accuracy of the torque deviation of the P3 motor can be further improved.

In an optional embodiment, preset detection conditions corresponding to the P1 motor include at least one of the following: an operating temperature of the P1 motor being within a second preset temperature range; a voltage of the P1 motor being within a second preset voltage range; a current of the P1 motor being within a second preset current range; an operating rotational speed of the P1 motor being within a second preset rotation speed range; and an output torque fed back by the P1 motor being within a second preset torque range.

According to the above technical means, at least one of the operating temperature of the P1 motor, the voltage of the P1 motor, the current of the P1 motor, the operating rotational speed of the P1 motor, and the output torque fed back by the P1 motor is limited by the preset detection conditions corresponding to the P1 motor. Thus it can be avoided that the torque deviation of the P1 is detected under boundary conditions of an operating temperature boundary, a voltage boundary, a current boundary, an operating rotational speed boundary, or an output torque boundary of the P1 motor, such that accuracy of the torque deviation of the P1 motor can be further improved.

In an optional embodiment, preset detection conditions corresponding to the engine include at least one of the following: an operating temperature of the engine being within a third preset temperature range, an ignition angle intervention being in an inactive state, the engine having no fault, an operating rotational speed of the engine being within a third preset rotation speed range, and an output torque fed back by the engine being within a third preset torque range.

According to the above technical means, at least one of the operating temperature of the engine, an ignition angle intervention state, a fault condition of the engine, the operating rotational speed of the engine, and the output torque fed back by the engine is limited by the preset detection conditions corresponding to the engine. Thus it can be avoided that the torque deviation of the engine is detected under boundary conditions of an operating temperature boundary, an ignition angle intervention, an engine failure, an operating rotational speed boundary, or an output torque boundary of the engine, such that accuracy of the torque deviation of the engine can be further improved.

In a second aspect, the present disclosure provides an apparatus for controlling a torque of a hybrid electric vehicle. The device includes:
a working condition parameter obtaining module configured to, obtain working condition parameters of power sources, where the power sources include an engine, a P1 motor and a P3 motor;
an actual torque calculating module configured to, calculate, when a target power source with a working condition parameter satisfying corresponding preset detection conditions exists in the power sources, a target actual torque of the target power source;
an output torque obtaining module configured to, obtain a current output torque fed back by the target power source;
a torque deviation calculating module configured to, obtain a torque deviation of the target power source at a current operating rotational speed and the current output torque based on a difference between the target actual torque and the current output torque;
a torque deviation storing module configured to, store the torque deviation in a torque precision look-up table corresponding to the target power source, where the torque precision look-up table is configured for storing torque deviations of the target power source at different operating rotational speeds and torques; and
a target torque controlling module configured to, control a torque of the target power source based on the torque precision look-up table.

In an optional embodiment, the actual torque calculating module includes:
a first power obtaining unit configured to, obtain a first output power of a power supply device and a first electric power of a target electric device when a working condition parameter of the P3 motor satisfies corresponding preset detection conditions and the P1 motor is in an inactive state;
a first power calculating unit configured to, obtain a first motor power of the P3 motor based on a difference between the first output power and the first electric power;
a first data obtaining unit configured to, obtain a first motor efficiency of the P3 motor and a first operating rotational speed of the P3 motor; and
a first torque correcting unit configured to, calculate a target actual torque of the P3 motor based on the first motor power, the first motor efficiency, and the first operating rotational speed.

In an optional embodiment, the actual torque calculating module further includes:
a second power obtaining unit configured to, obtain a second output power of a power supply device and a second electric power of a target electric device when a working condition parameter of the P1 motor satisfies corresponding preset detection conditions;
a second power calculating unit configured to, obtain a total motor power based on a difference between the second output power and the second electric power;
a third power calculating unit configured to, obtain a second motor power of the P3 motor;
a fourth power calculating unit configured to, obtain a third motor power of the P1 motor based on a difference between the total motor power and the second motor power;
a second data obtaining unit configured to, obtain a second motor efficiency of the P1 motor and a second operating rotational speed of the P1 motor; and
a second torque correcting unit configured to, calculate a target actual torque of the P1 motor based on the third motor power, the second motor efficiency, and the second operating rotational speed.

In an optional embodiment, the third power calculating unit includes:
a motor data obtaining sub-unit configured to, obtain a first output torque fed back by the P3 motor and a third operating rotational speed of the P3 motor;
a torque precision look-up sub-unit configured to, query a first torque deviation of the P3 motor from a torque precision look-up table corresponding to the P3 motor based on the first output torque and the third operating rotational speed;
an actual torque calculating sub-unit configured to, obtain first actual torque of the P3 motor based on a sum of the first output torque and the first torque deviation;
a motor efficiency obtaining sub-unit configured to, obtain a third motor efficiency of the P3 motor; and
a motor power calculating sub-unit configured to, calculate the second motor power based on the first actual torque, the third motor efficiency, and the third operating rotational speed.

In an optional embodiment, the actual torque calculating module further includes:
a third data obtaining unit configured to, obtain a second output torque fed back by the P1 motor and a fourth operating rotational speed of the P1 motor when a working condition parameter of the engine satisfies corresponding preset detection conditions;
a torque precision look-up unit configured to, query a second torque deviation of the P1 motor from a torque precision look-up table corresponding to the P1 motor based on the second output torque and the fourth operating rotational speed;
a third torque correcting unit configured to, obtain a second actual torque of the P1 motor based on a sum of the second output torque and the second torque deviation; and
an actual torque converting unit configured to, calculate a target actual torque of the engine based on a speed ratio of the P1 motor to the engine and the second actual torque.

In an optional embodiment, the torque deviation storing module includes:
a continuous duration obtaining unit configured to, obtain a continuous duration for which the target power source satisfies the corresponding preset detection conditions; and
a torque deviation storing unit configured to, store the torque deviation in the torque precision look-up table corresponding to the target power source when the continuous duration is greater than a target detection duration.

In an optional embodiment, in the actual torque calculating module, preset detection conditions corresponding to the P3 motor include at least one of the following: an operating temperature of the P3 motor being within a first preset temperature range; a voltage of the P3 motor being within a first preset voltage range; a current of the P3 motor being within a first preset current range; an operating rotational speed of the P3 motor being within a first preset rotation speed range; and an output torque fed back by the P3 motor being within a first preset torque range.

In an optional embodiment, in the actual torque calculating module, preset detection conditions corresponding to the P1 motor include at least one of the following: an operating temperature of the P1 motor being within a second preset temperature range; a voltage of the P1 motor being within a second preset voltage range; a current of the P1 motor being within a second preset current range; an operating rotational speed of the P1 motor being within a second preset rotation speed range; and an output torque fed back by the P1 motor being within a second preset torque range.

In an optional embodiment, in the actual torque calculating module, preset detection conditions corresponding to the engine include at least one of the following: an operating temperature of the engine being within a third preset temperature range, an ignition angle intervention being in an inactive state, the engine having no fault, an operating rotational speed of the engine being within a third preset rotation speed range, and an output torque fed back by the engine being within a third preset torque range.

In a third aspect, the present disclosure provides a hybrid electric vehicle. The hybrid electric vehicle includes:
an engine configured to, provide a drive force for the hybrid electric vehicle;
a P1 motor provided on a crankshaft of the engine;
a P3 motor provided at an output end of a transmission; and
a vehicle controller connected to the engine, the P1 motor, and the P3 motor, configured to execute the method for controlling a torque of a hybrid electric vehicle according to the first aspect or any one of the embodiments corresponding to the first aspect.

In a fourth aspect, the present disclosure provides a computer-readable storage medium. Computer instructions are stored on the computer-readable storage medium. The computer instruction is configured to, cause a computer to execute the method for controlling a torque of a hybrid electric vehicle according to the first aspect or any one of embodiments corresponding to the first aspect.

The present disclosure has the following beneficial effects:
(1) In the present disclosure, when a working condition parameter of a power source of the P13-configuration hybrid electric vehicle satisfies corresponding preset detection conditions, a target actual torque of the power source is calculated, such that based on a difference between the target actual torque and a current output torque fed back by the power source, a torque deviation of the target power source at a current operating rotational speed and the current output torque is obtained. The obtained torque deviation is stored in a torque precision look-up table corresponding to the power source. Accordingly, when torque control is performed on the power source, the torque of the power source can be corrected based on the torque precision look-up table corresponding to the power source, so as to improve torque control precision of the power source of the P13-configuration hybrid electric vehicle, and improve driving robustness and smoothness of the hybrid electric vehicle.
(2) In the present disclosure, the first output power of the power supply device and the first electric power of the target electric device are obtained only when the working condition parameter of the P3 motor satisfies the corresponding preset detection conditions and the P1 motor is in the inactive state. Thus the target actual torque of the P3 motor is obtained by using a power conservation principle and a torque balance principle. Accordingly, an influence of a working boundary condition of the P3 motor on the target actual torque of the P3 motor can be avoided. Moreover, an influence of a torque control error of the P1 motor on the P3 motor can be avoided. Thus accuracy of the target actual torque of the P3 motor is improved.
(3) In the present disclosure, the second output power of the power supply device and the second electric power of the target electric device are obtained only when the working condition parameter of the P1 motor satisfies the corresponding preset detection conditions. Thus the target actual torque of the P1 motor is obtained by using a power conservation principle and a torque balance principle. Accordingly, an influence of a working boundary condition of the P1 motor on the target actual torque of the P1 motor can be avoided. Thus accuracy of the target actual torque of the P1 motor is improved.
(4) In the present disclosure, the second output torque fed back by the P1 motor and the fourth operating rotational speed of the P1 motor are obtained only when the working condition parameter of the engine satisfies the corresponding preset detection conditions. Thus, the target actual torque of engine is obtained by using a torque correlation between the P1 motor and the engine. Accordingly, an influence of a working boundary condition of the engine on the target actual torque of the engine can be avoided. Thus accuracy of the target actual torque of the engine is improved.

### BRIEF DESCRIPTION OF THE DRAWINGS

In order to more clearly illustrate technical solutions in the embodiments of the present disclosure or in the prior art, a brief introduction to the accompanying drawings required for the description of the embodiments or the prior art will be provided below. Apparently, the accompanying drawings in the following description are some of the embodiments of the present disclosure, and those of ordinary skill in the art would also be able to derive other drawings from these drawings without making creative efforts.
FIG. 1 is a flowchart of a first method for controlling a torque of a hybrid electric vehicle according to an example of the present disclosure;
FIG. 2 is a schematic diagram of a torque precision look-up table of a P1 motor according to an example of the present disclosure;
FIG. 3 is a flowchart of a second method for controlling a torque of a hybrid electric vehicle according to an example of the present disclosure;
FIG. 4 is a flowchart of a third method for controlling a torque of a hybrid electric vehicle according to an example of the present disclosure;
FIG. 5 is a flowchart of a fourth method for controlling a torque of a hybrid electric vehicle according to an example of the present disclosure;
FIG. 6 is a structural block diagram of an apparatus for controlling a torque of a hybrid electric vehicle according to an example of the present disclosure;
FIG. 7 is a block diagram of a hybrid electric vehicle according to an example of the present disclosure; and
FIG. 8 is a structural block diagram of a vehicle controller according to an example of the present disclosure.

Reference numerals: 1. engine; 2. power supply device; 3. transmission; 31. P1 motor; 32. P3 motor; 33. clutch; 34. reduction gear; 35. main speed reducer; 4. front wheel; 10. processor; 20. memory; and 30. communication interface.

### DETAILED DESCRIPTION

In order to make the objectives, technical solutions, and advantages in examples of the present disclosure clearer, the technical solutions in the examples of the present disclosure are clearly and completely described below with reference to the accompanying drawings in the examples of the present disclosure. Apparently, the examples described are some examples rather than all examples of the present disclosure. All other embodiments obtained by those skilled in the art based on the embodiments of the present disclosure without creative efforts shall fall within the protection scope of the present disclosure.

Currently, there are some deviations between an actual torque and a theoretical control torque of an engine, a P1 motor and a P3 motor of a P13-configuration hybrid electric vehicle typically, causing low torque control precision of a power source of the P13-configuration hybrid electric vehicle.

In the related art, the torque control precision of the vehicle is mainly controlled through the following two methods. In a first method, torque precision of a demand torque of the hybrid electric vehicle at different torque components is obtained based on relational data of torque precision of a target torque reference point of an engine and reference torque precision of the engine, relational data of the reference torque precision of the engine and motor torque precision, and the motor torque precision. Thus a torque of the hybrid electric vehicle is compensated accordingly according to the torque precision, and then a control error due to a change in a difference between an indicated torque and an actual torque is reduced. In a second method, a specific torque detection working condition is performed by activating a specific torque precision detection command. Thus torque control precision of an engine is detected based on a torque of a P1 motor.

However, the first method is only applicable to a hybrid electric vehicle with a P2 architecture and a dual-clutch control. The torque control precision of the hybrid electric vehicle can be verified and compensated by using pressure features of a clutch. The second method relies on specific torque precision detection commands and requires to limit specific engine working conditions. Moreover, this method does not consider the torque control precision of the P1 motor when calculating the torque control precision of the engine. When the P1 motor has a problem in torque control precision, the torque control precision of the engine is inaccurate.

Accordingly, the above two methods are not suitable for torque control precision detection of the P13-configuration hybrid electric vehicle on one hand, and have low torque control precision of the hybrid electric vehicle on the other hand.

In view of this, according to the examples of the present disclosure, a method for controlling a torque of a hybrid electric vehicle is provided. It should be noted that steps shown in the flowcharts of the accompanying drawings may be performed in a computer system, such as a set of computer-executable instructions. Moreover, although logic orders are shown in the flowcharts, in some cases, the steps shown or described may be performed in an order different from those herein.

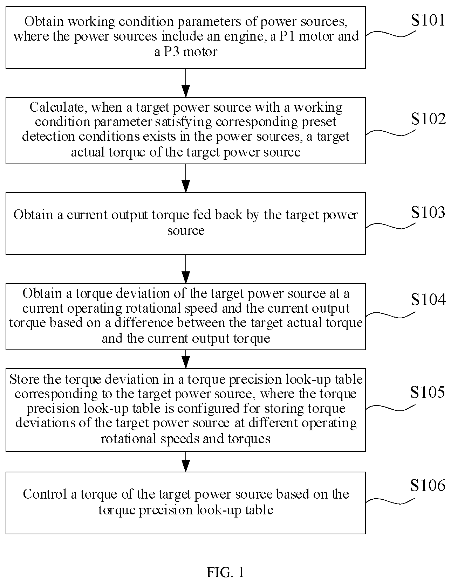

In the examples, a method for controlling a torque of a hybrid electric vehicle is provided, which can be applied to the P13-configuration hybrid electric vehicle described above, such as an onboard controller or an electronic control unit of a hybrid electric vehicle. FIG. 1 is a flowchart of a first method for controlling a torque of a hybrid electric vehicle according to an example of the present disclosure. As shown in FIG. 1, the flow includes:
S101, working condition parameters of power sources are obtained, where the power sources include an engine, a P1 motor and a P3 motor.

Specifically, working condition parameters of the engine include at least one of a water temperature of the engine, an intake air temperature of the engine, an oil temperature of the engine, an ignition angle intervention state, a fault condition of the engine, an operating rotational speed of the engine, and an output torque of the engine.

Specifically, working condition parameters of the P1 motor include at least one of an electric control temperature of the P1 motor, a rotor temperature of the P1 motor, a stator temperature of the P1 motor, an operating rotational speed of the P1 motor, and an output torque of the P1 motor. Furthermore, the working condition parameters of the P1 motor may also include a working mode of the P1 motor, such as a standby mode.

Specifically, working condition parameters of the P3 motor include an electric control temperature of the P3 motor, a rotor temperature of the P3 motor, a stator temperature of the P3 motor, an operating rotational speed of the P3 motor, and an output torque of the P3 motor.

S102, when a target power source with a working condition parameter satisfying corresponding preset detection conditions exists in the power sources, a target actual torque of the target power source is calculated.

Illustratively, when the P3 motor satisfies corresponding preset detection conditions, the P3 motor is taken as the target power source. A target actual torque of the P3 motor is calculated. When the P1 motor satisfies corresponding preset detection conditions, the P1 motor is taken as the target power source. A target actual torque of the P1 motor is calculated. When the engine satisfies corresponding preset detection conditions, the engine is taken as the target power source. A target actual torque of the engine is calculated.

It should be noted that the significance of the preset detection conditions is to prevent a torque deviation of the corresponding power source from being influenced by a boundary condition factor as much as possible, such that a calculation result of the torque deviation is more accurate.

S 103, a current output torque fed back by the target power source is obtained.

Illustratively, the current output torque fed back by the target power source is a torque signal value fed back by the target power source.

Furthermore, in actual operation, corresponding torque sensors may be provided on the P1 motor, the P3 motor and the engine. The corresponding torque sensors measure a current output torque of the P1 motor, a current output torque of the P3 motor or a current output torque of the engine.

S 104, a torque deviation of the target power source at a current operating rotational speed and the current output torque is obtained based on a difference between the target actual torque and the current output torque.

Illustratively, when the target actual torque of the target power source is 87 Nm, and the current output torque is 90 Nm, the torque deviation at the current operating rotational speed and the current output torque is -3 Nm. It can be understood that the motor works based on a principle of electromagnetic induction. In the motor, a current flows through a coil and generates a magnetic field. The generated magnetic field interacts with a current in a rotor, so as to generate a torque to rotate the rotor. Accordingly, when a rotation speed of the motor changes, its output torque also changes, such that the obtained torque deviation varies with changes in the current operating rotational speed and the current output torque of the target power source.

S105, the torque deviation is stored in a torque precision look-up table corresponding to the target power source, where the torque precision look-up table is configured for storing torque deviations of the target power source at different operating rotational speeds and torques.

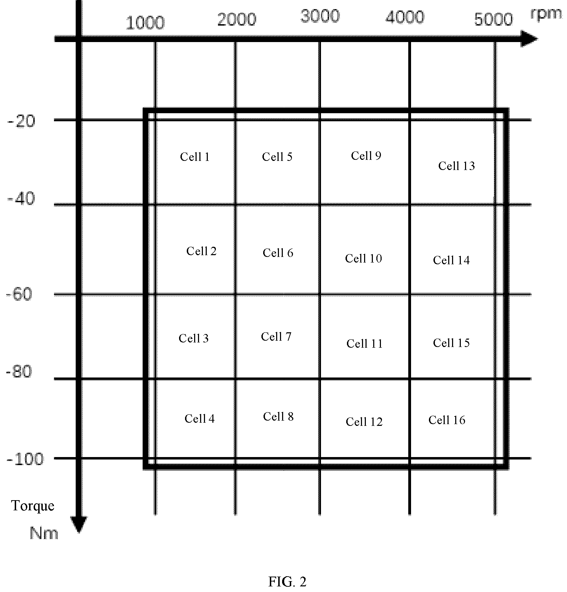

It should be noted that different power sources are provided with the corresponding torque precision look-up tables. Specifically, each torque precision look-up table is constructed by the following steps: a common torque interval and a common rotation speed interval of a corresponding power source are obtained; and the common torque interval and the common rotation speed interval are divided into several cells according to preset division precision by taking an operating rotational speed and a torque of the power source as two variables, where each cell is provided with a corresponding serial number. Illustratively, as shown in FIG. 2, with the P1 motor as an instance, assuming that the P1 motor has a common rotation speed interval ranging from 1000 r to 5000 r, and a common torque interval ranging from- 20 Nm to -100 Nm, the common torque interval and the common rotation speed interval may be divided into 16 cells according to every 1000 r and every 20 Nm, and the cells are marked with serial numbers 1 to 16 respectively, such that the torque precision look-up table of the P1 motor is obtained.

Furthermore, in the torque precision look-up table corresponding to each power source, an initial value of the torque deviation stored in each cell is 0. When a current torque deviation corresponding to a current cell is obtained through calculation, the torque deviation stored in the current cell is updated to a current torque deviation. For example, when a torque deviation of cell 1 of the torque precision look-up table of the P1 motor obtained according to S101 to S104 is 5 Nm, the torque deviation stored in cell 1 is updated to 5 Nm.

It should be noted that a method for calculating a torque deviation in the example does not need to control the operating rotational speed or the torque of the engine, the P1 motor or the P3 motor, but performs real-time determination according to the operating rotational speed and the torque of the engine, the P1 motor or the P3 motor during normal driving of the hybrid electric vehicle. When the working condition parameter of the engine satisfies the corresponding preset detection conditions first, a torque deviation of the engine at the current operating rotational speed and the torque is calculated first. When the working condition parameter of the P1 motor satisfies the corresponding preset detection conditions first, a torque deviation of the P1 motor at the current operating rotational speed and the torque is calculated first. When the working condition parameter of the P3 motor satisfies the corresponding preset detection conditions first, a torque deviation of the P3 motor at the current operating rotational speed and the torque is calculated first. An order of torque deviation calculation of the engine, the P1 motor, and the P3 motor is not limited.

S 106, a torque of the target power source is controlled based on the torque precision look-up table.

Specifically, the current torque deviation may be queried from the corresponding torque precision look-up table according to the current operating rotational speed of the target power source and a distributed original distribution torque. Target distribution torque is obtained based on a sum of the original distribution torque and the current torque deviation. The target power source is controlled to adjust the torque to the target distribution torque.

According to the method for controlling a torque of a hybrid electric vehicle in the examples of the present disclosure, when a working condition parameter of a power source of the P13-configuration hybrid electric vehicle satisfies corresponding preset detection conditions, a target actual torque of the power source is calculated, such that based on a difference between the target actual torque and a current output torque fed back by the power source, a torque deviation of the target power source at a current operating rotational speed and the current output torque is obtained. The obtained torque deviation is stored in a torque precision look-up table corresponding to the power source. Accordingly, when torque control is performed on the power source, the torque of the power source can be corrected based on the torque precision look-up table corresponding to the power source, so as to improve torque control precision of the power source of the P13-configuration hybrid electric vehicle, and improve driving robustness and smoothness of the hybrid electric vehicle.

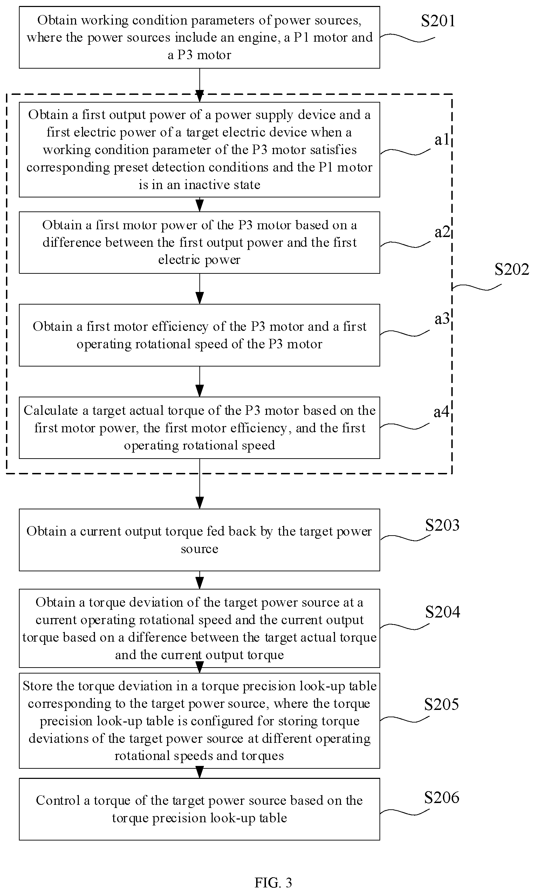

FIG. 3 is a flowchart of a second method for controlling a torque of a hybrid electric vehicle according to an example of the present disclosure. As shown in FIG. 3, the flow includes:
S201, working condition parameters of power sources are obtained, where the power sources include an engine, a P1 motor and a P3 motor. Reference is made to S101 of the above example for detail, which will not be repeated herein.

S202, when a target power source with a working condition parameter satisfying corresponding preset detection conditions exists in the power sources, a target actual torque of the target power source is calculated.

In some optional embodiments, preset detection conditions corresponding to the P3 motor includes at least one of the following: an operating temperature of the P3 motor being within a first preset temperature range; a voltage of the P3 motor being within a first preset voltage range; a current of the P3 motor being within a first preset current range; an operating rotational speed of the P3 motor being within a first preset rotation speed range; and an output torque fed back by the P3 motor being within a first preset torque range.

Illustratively, the operating temperature of the P3 motor includes an electronic control temperature, a rotor temperature, and a stator temperature of the P3 motor.

Optionally, the first preset temperature range is 15°C to 65°C. It should be noted that in actual operation, the first preset temperature range may be adjusted according to an actual situation of the P3 motor. A value of the first preset temperature range should avoid the torque control precision of the P3 motor being influenced by the operating temperature, such that accuracy of subsequent calculation of the target actual torque of the P3 motor can be guaranteed.

It should be noted that values of the first preset voltage range and the first preset current range need to refer to a working platform of a motor matching the P3 motor, such that the torque control precision of the P3 motor can be prevented from being influenced by a voltage and a current. Illustratively, with a P3 motor of a 320 V working platform as an instance, the first preset voltage range should not be lower than 280 V. When a voltage of the P3 motor is lower than 280 V, a maximum torque and a motor efficiency of the P3 motor is influenced. When the target actual torque of the P3 motor is calculated when the voltage of the P3 motor is lower than 280 V, a torque deviation calculated later is greatly different from the actual situation. Similarly, a value of the second preset current range should not exceed a bearing range of the matching motor.

Optionally, the first preset rotation speed range is a common rotation speed interval of the P3 motor. The first preset torque range is a common torque interval of the P3 motor.

In some optional embodiments, as shown in FIG. 3, S202 includes:
step a1, a first output power of a power supply device and a first electric power of a target electric device are obtained when a working condition parameter of the P3 motor satisfies corresponding preset detection conditions and the P1 motor is in an inactive state.

It should be noted that in order to avoid an influence of the torque accuracy of the P1 motor on the P3 motor, when the working condition parameter of the P3 motor satisfies the corresponding preset detection conditions, the P1 motor needs to be in an inactive state. Specifically, when the output torque of the P1 motor is 0 and the operating rotational speed of the P1 motor is 0, it is determined that the P1 motor is in the inactive state. Alternatively, when the output torque of the P1 motor is 0 and the P1 motor is in a standby state, it is determined that the P1 motor is in the inactive state.

It should be noted that the target electric device is a high-voltage electric device, that is, an apparatus powered by a power supply device besides the P1 motor, the P3 motor and the engine. The power supply device is a battery.

Step a2, a first motor power of the P3 motor is obtained based on a difference between the first output power and the first electric power.

It should be noted that since the P1 motor is in the inactive state, an electric power portion of the entire hybrid electric vehicle includes the target electric device and the P3 motor. Thus the first motor power of the P3 motor can be obtained by subtracting the first electric power (that is, non-drive power consumption) of the target electric device from the first output power of the power supply device.

Step a3, a first motor efficiency of the P3 motor and a first operating rotational speed of the P3 motor are obtained.

Specifically, the first motor efficiency of the P3 motor may be obtained through a test result of the P3 motor on a bench.

Specifically, the first operating rotational speed of the P3 motor may be obtained through a rotation-speed measuring instrument, a slip ring on a rotor of the P3 motor, or a vibration sensor.

Step a4, a target actual torque of the P3 motor is calculated based on the first motor power, the first motor efficiency, and the first operating rotational speed.

Specifically, step a4 includes: a first mechanical power of the P3 motor is obtained based on the first motor power and the first motor efficiency; and the target actual torque of the P3 motor is obtained based on the first mechanical power and the first operating rotational speed.

Illustratively, assuming that the first motor power of the P3 motor is calculated to be 50 kW according to the first output power of the power supply device and the first electric power of the target electric device, the first operating rotational speed of the P3 motor is 5000 rpm. Moreover, according to the test results of the P3 motor on the bench, in this case, the first motor efficiency of the P3 motor is 92%, and the target actual torque of the P3 motor is: 50*0.92*9550/5000=87.86 Nm.

According to the method for controlling a torque of a hybrid electric vehicle in the examples of the present disclosure, the first output power of the power supply device and the first electric power of the target electric device are obtained only when the working condition parameter of the P3 motor satisfies the corresponding preset detection conditions and the P1 motor is in the inactive state. Thus the target actual torque of the P3 motor is obtained by using a power conservation principle and a torque balance principle. Accordingly, an influence of a working boundary condition of the P3 motor on the target actual torque of the P3 motor can be avoided. Moreover, an influence of a torque control error of the P1 motor on the P3 motor can be avoided. Thus accuracy of the target actual torque of the P3 motor is improved, and accuracy of the torque deviation corresponding to the P3 motor is further improved in a subsequent torque deviation calculating process.

In some optional embodiments, preset detection conditions corresponding to the P1 motor includes at least one of the following: an operating temperature of the P1 motor being within a second preset temperature range; a voltage of the P1 motor being within a second preset voltage range; a current of the P1 motor being within a second preset current range; an operating rotational speed of the P1 motor being within a second preset rotation speed range; and an output torque fed back by the P1 motor being within a second preset torque range.

Illustratively, the operating temperatures of the P1 motor include an electronic control temperature, a rotor temperature, and a stator temperature of the P1 motor.

Optionally, the second preset temperature range is 15°C to 65°C. It should be noted that similar to the value of the first preset temperature range, the second preset temperature range may be adjusted according to an actual situation of the P1 motor. A value of the second preset temperature range should avoid the torque control precision of the P1 motor being influenced by the operating temperature, such that accuracy of subsequent calculation of the target actual torque of the P1 motor can be guaranteed.

It should be noted that similar to the values of the first preset voltage range and the first preset current range, values of the second preset voltage range and the second preset current range need to be delimited according to a voltage platform and a working current range of the P1 motor, such that a situation that subsequent detection precision of the torque deviation of the P1 motor is influenced when the P1 motor does not work under normal boundary conditions.

Optionally, the second preset rotation speed range is a common rotation speed interval of the P1 motor. The second preset torque range is a common torque interval of the P1 motor.

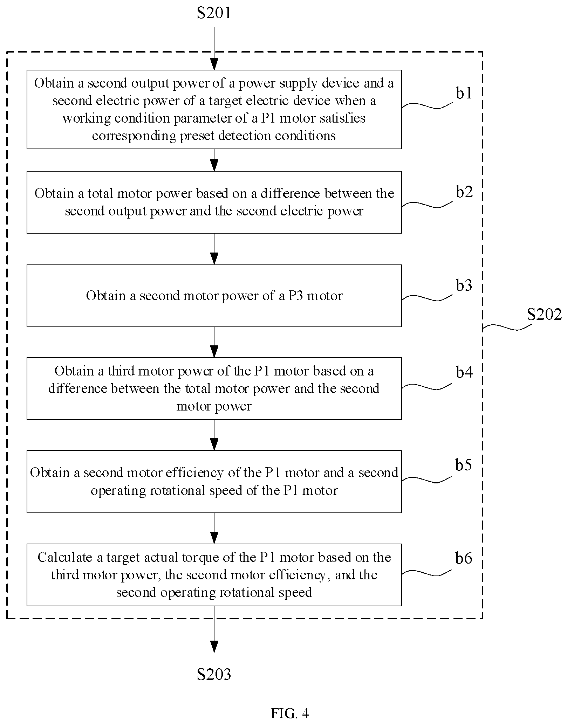

In some optional embodiments, as shown in FIG. 4, S202 further includes:
Step b1, a second output power of a power supply device and a second electric power of a target electric device are obtained when a working condition parameter of the P1 motor satisfies corresponding preset detection conditions.

Specifically, the second output power of the power supply device may be obtained from a current signal value and a voltage signal value of the power supply device.

Specifically, the second electric power of the target electric device may be obtained by a power measuring device connected to the target electric device. Alternatively, the second electric power of the target electric device is obtained according to a current signal value and a voltage signal value of the target electric device.

Step b2, a total motor power is obtained based on a difference between the second output power and the second electric power.

It should be noted that step b2 above defaults that the P1 motor and the P3 motor are activated. In this case, the total motor power of the P1 motor and the P3 motor is obtained by subtracting the second electric power from the second output power.

Step b3, a second motor power of the P3 motor is obtained.

Specifically, the second motor power of the P3 motor may be obtained by a power measuring device connected to the P3 motor. Alternatively, the second motor power of the P3 motor is obtained according to the output torque, the current operating rotational speed and the corresponding torque precision look-up table of the P3 motor.

As an optional embodiment, the step b3 includes: a first output torque fed back by the P3 motor and a third operating rotational speed of the P3 motor are obtained; a first torque deviation of the P3 motor is queried from a torque precision look-up table corresponding to the P3 motor based on the first output torque and the third operating rotational speed; a first actual torque of the P3 motor is obtained based on a sum of the first output torque and the first torque deviation; a third motor efficiency of the P3 motor is obtained; and the second motor power is calculated based on the first actual torque, the third motor efficiency, and the third operating rotational speed.

Illustratively, assuming that a current third operating rotational speed of the P3 motor is 5000 rpm, and the first output torque is 90 Nm, a corresponding torque deviation of 5000 rpm and 90 Nm in the torque precision look-up table of the p1 motor is 5 Nm, and it is obtained by querying the table that the third motor efficiency of the P3 motor in this case is 92%. Then, the second motor power obtained after correction of the P3 motor is: 5000*(90+5)/9550/0.92=54 kW.

Step b4, a third motor power of the P1 motor is obtained based on a difference between the total motor power and the second motor power.

It can be understood that since the total motor power is a sum of a current motor power of the P1 motor and a current motor power of the P3 motor, after the second motor power of the P3 motor is obtained, the second motor power can be subtracted from the total motor power to obtain the current third motor power of the P3 motor.

Step b5, a second motor efficiency of the P1 motor and a second operating rotational speed of the P1 motor are obtained.

Specifically, the second motor efficiency of the P1 motor may be obtained through a test result of the P1 motor on a bench.

Specifically, the second operating rotational speed of the P1 motor may be obtained through a rotation-speed measuring instrument, a slip ring on a rotor of the P1 motor, or a vibration sensor.

Step b6, a target actual torque of the P1 motor is calculated based on the third motor power, the second motor efficiency, and the second operating rotational speed.

Specifically, step b6 includes: a second mechanical power of the P1 motor is obtained based on the third motor power and the second motor efficiency; and the target actual torque of the P1 motor is obtained based on the second mechanical power and the second operating rotational speed. It should be noted that reference may be made to a specific calculation process of the target actual torque of the P3 motor for a specific calculation process of the target actual torque of the P1 motor, which is not repeated herein.

According to the method for controlling a torque of a hybrid electric vehicle in the examples of the present disclosure, the second output power of the power supply device and the second electric power of the target electric device are obtained only when the working condition parameter of the P1 motor satisfies the corresponding preset detection conditions. Thus the target actual torque of the P1 motor is obtained by using a power conservation principle and a torque balance principle. Accordingly, an influence of a working boundary condition of the P1 motor on the target actual torque of the P1 motor can be avoided. Thus accuracy of the target actual torque of the P1 motor is improved, and accuracy of the torque deviation corresponding to the P1 motor is further improved in a subsequent torque deviation calculating process.

In some optional embodiments, preset detection conditions corresponding to the engine includes at least one of the following: an operating temperature of the engine being within a third preset temperature range, an ignition angle intervention being in an inactive state, the engine having no fault, an operating rotational speed of the engine being within a third preset rotation speed range, and an output torque fed back by the engine being within a third preset torque range.

Illustratively, the operating temperatures of the engine include a water temperature, an intake air temperature, and an oil temperature of the engine.

Optionally, the third preset temperature ranges include a water temperature range, an intake air temperature range, and an oil temperature range.

Optionally, the water temperature ranges from 60°C to 120°C, the intake air temperature ranges from 15°C to 55°C, and the oil temperature ranges from 40°C to 80°C.

It should be noted that similar to the values of the first preset voltage range and the first preset current range, values of the third preset voltage range and the third preset current range need to be delimited according to a voltage platform and a working current range of the engine, such that a situation that subsequent detection precision of the torque deviation of the engine is influenced when the engine does not work under normal boundary conditions.

Optionally, the third preset rotation speed range is a common rotation speed interval of the engine. The third preset torque range is a common torque interval of the engine.

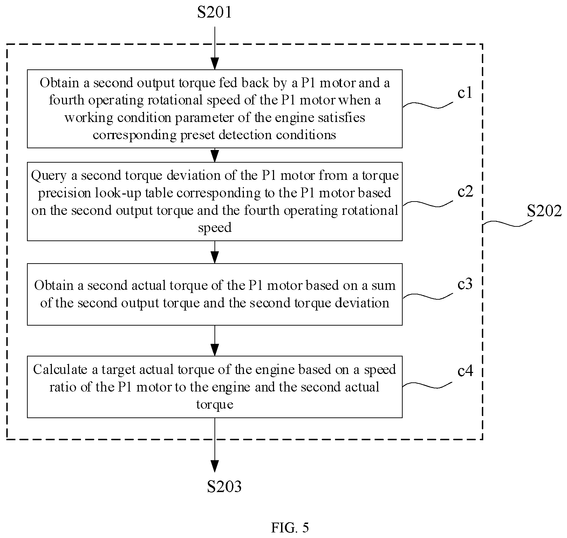

In some optional embodiments, as shown in FIG. 5, S202 further includes:
Step c1, a second output torque fed back by the P1 motor and a fourth operating rotational speed of the P1 motor are obtained when a working condition parameter of the engine satisfies corresponding preset detection conditions.

Specifically, the second output torque is obtained from a torque signal value fed back by the P1 motor. The fourth operating rotational speed of the P1 motor may be obtained through a rotation-speed measuring instrument, a slip ring on the rotor of the P1 motor, or a vibration sensor.

Step c2, a second torque deviation of the P1 motor is queried from a torque precision look-up table corresponding to the P1 motor based on the second output torque and the fourth operating rotational speed.

It can be understood that since the output torque of the P1 motor may have a deviation from its actual torque, a corresponding cell in the torque precision look-up table corresponding to the P1 motor and a torque deviation in the cell may be queried according to the current second output torque and the current fourth operating rotational speed of the P1 motor. Thus the second torque deviation is obtained.

Step c3, a second actual torque of the P1 motor is obtained based on a sum of the second output torque and the second torque deviation.

It can be understood that since the output torque of the P1 motor may have a deviation from an actual torque, the current output torque of the P1 motor needs to be corrected through the above torque deviation which is queried. Thus the actual torque of the current P1 motor can be obtained, and then accuracy of the torque of the P1 motor can be guaranteed.

Step c4, a target actual torque of the engine is calculated based on a speed ratio of the P1 motor to the engine and the second actual torque.

It should be noted that in the P13-configuration hybrid electric vehicle, the torque of the engine is related to the torque of the P1 motor, the power of the engine is equal to that of the P1 motor, and the rotation speeds of the engine and the P1 motor are related to the speed ratio. Accordingly, the target actual torque of the engine can be calculated based on the speed ratio of the P1 motor to the engine and the current actual torque of the P1 motor.

Illustratively, assuming that the speed ratio of the P1 motor to the engine is 2:1, the torque of the P1 motor is 1/2 of the torque of the engine.

According to the method for controlling a torque of a hybrid electric vehicle in the examples of the present disclosure, the second output torque fed back by the P1 motor and the fourth operating rotational speed of the P1 motor are obtained only when the working condition parameter of the engine satisfies the corresponding preset detection conditions. Thus, the target actual torque of engine is obtained by using a torque correlation between the P1 motor and the engine. Accordingly, an influence of a working boundary condition of the engine on the target actual torque of the engine can be avoided. Thus accuracy of the target actual torque of the engine is improved, and accuracy of the torque deviation corresponding to the engine is further improved in a subsequent torque deviation calculating process.

S203, a current output torque fed back by the target power source is obtained. Reference is made to S103 of the above example for detail, which will not be repeated herein.

S204, a torque deviation of the target power source at a current operating rotational speed and the current output torque is obtained based on a difference between the target actual torque and the current output torque. Reference is made to S104 of the above example for detail, which will not be repeated herein.

S205, the torque deviation is stored in a torque precision look-up table corresponding to the target power source, where the torque precision look-up table is configured for storing torque deviations of the target power source at different operating rotational speeds and torques.

In some optional embodiments, S205 includes: a continuous duration for which the target power source satisfies the corresponding preset detection conditions is obtained; and the torque deviation is stored in the torque precision look-up table corresponding to the target power source when the continuous duration is greater than a target detection duration.

Further, the torque deviation is stored in the torque precision look-up table corresponding to the target power source when the continuous duration is greater than a target detection duration. Specifically, the torque deviation to be stored is obtained based on an average value of torque deviations within the continuous duration when the continuous duration is longer than the target detection duration; and the torque deviation to be stored is stored in the torque precision look-up table corresponding to the target power source.

It can be understood that a motor power or an output torque tends to vary during driving of the hybrid electric vehicle. Accordingly, during detection of an actual torque deviation, an average value of torque deviations within a period of time needs to be taken. When the continuous duration for which the target power source satisfies the corresponding preset detection conditions is less than or equal to the target detection duration, a torque deviation obtained this time is discarded, and the torque deviation obtained this time is not counted into a memory.

Specifically, based on the current operating rotational speed and the current output torque of the target power source, a target cell stored in the corresponding torque precision look-up table is determined. The torque deviation of the target power source is stored in the target cell. It should be noted that when the target power source repeatedly satisfies the corresponding preset detection conditions, a torque deviation detected at a next time corresponding to each cell overrides a torque deviation detected at a previous time.

According to the method for controlling a torque of a hybrid electric vehicle in the examples of the present disclosure, the torque deviation is stored in the torque precision look-up table corresponding to the target power source only when the continuous duration for which the target power source satisfies the corresponding preset detection conditions is greater than the target detection duration. Thus an influence when the target power source changes temporarily can be avoided. Accuracy of the torque deviations in the torque precision look-up table corresponding to the target power source can be further guaranteed. The torque control precision of the target power source can be further improved.

S206, a torque of the target power source is controlled based on the torque precision look-up table.

Specifically, when a power control unit (PCU) performs corresponding torque distribution, an original distribution torque distributed to the target power source needs to be added to a current torque deviation queried in a corresponding torque precision look-up table to obtain target distribution torque. Thus the torque deviation is eliminated from the target distribution torque, and then the torque control precision for the target power source is improved. The current torque deviation needs to be queried in a target cell of the torque precision look-up table corresponding to the target power source according to a rotation speed interval corresponding to a current operating rotational speed of the target power source and a torque interval corresponding to the original distribution torque.

Furthermore, when torque correction is performed on the target power source, in order to prevent unnecessary impact caused by a sudden torque change, a smoothing coefficient needs to be set, such that the torque of the target power source changes at a particular rate. For example, the target power source is controlled to smoothly change the torque to the target distribution torque at a smoothing coefficient of 10 Nm/s.

Specifically, S206 includes: an original distribution torque of the target power source is obtained; the current torque deviation is queried from the torque precision look-up table corresponding to the target power source based on the original distribution torque and the current operating rotational speed; the target distribution torque is obtained based on a sum of the original distribution torque and the current torque deviation; and the target power source is controlled to adjust the torque to the target distribution torque.

Further, the target power source is controlled to adjust the torque to the target distribution torque as follows: a historical torque deviation of the original distribution torque corresponding to a previous operating rotational speed is obtained; when a difference between the current torque deviation and the historical torque deviation is greater than a first preset threshold, the torque of the target power source is smoothly changed to the target distribution torque based on a preset smoothing coefficient; and when the difference between the current torque deviation and the historical torque deviation is less than or equal to the first preset threshold, the torque of the target power source is directly adjusted to the target distribution torque.

Further, the target power source is controlled to adjust the torque to the target distribution torque further as follows: the current distribution torque of the target power source is obtained; when the difference between the current distribution torque and the target distribution torque is greater than a second preset threshold, the torque of the target power source is smoothly changed to the target distribution torque based on the preset smoothing coefficient; and when the difference between the current distribution torque and the target distribution torque is less than or equal to the second preset threshold, the torque of the target power source is directly adjusted to the target distribution torque.

It should be noted that through the method for controlling a torque of a hybrid electric vehicle in the present disclosure, when the engine, the P1 motor and the P3 motor respectively satisfy corresponding preset detection conditions during normal running of the hybrid electric vehicle, torque deviations corresponding to the engine, the P1 motor and the P3 motor may be detected, and the detected torque deviations may be stored in the corresponding torque precision look-up table. Accordingly, when torque distribution and control are performed on the engine, the P1 motor or the P3 motor of the P13-configuration hybrid electric vehicle, a distributed torque can be corrected according to the corresponding torque precision look-up table. Thus the torque control precision of the engine, the P1 motor and the P3 motor can improved, and then a power boundary of the power supply device (such as a battery) can be better protected. Moreover, problems such as a control deviation of a state of charge of the battery or unsmooth driving of the hybrid electric vehicle caused by low torque control precision can be avoided.

Furthermore, the method for controlling a torque of a hybrid electric vehicle in the present disclosure may determine the torque deviations of the engine, the P1 motor and the P3 motor by determining a power flow state of a specified scenario without relying on a state of the clutch. Furthermore, no specific instruction and no specific detection condition need to be executed, and the torque deviations of the engine, the P1 motor and the P3 motor can be detected under normal vehicle scenarios. Moreover, when the torque of the engine, the P1 motor and the P3 motor deviate, the engine, the P1 motor and the P3 motor can be corrected according to torque deviations detected in advance, such that a purpose that the target distribution torque of the engine, the P1 motor and the P3 motor are consistent with the actual torque is achieved. Thus problems of unsmooth driving and inaccurate electric quantity control caused by low torque control precision are avoided.

An apparatus for controlling a torque of a hybrid electric vehicle is further provided in the examples. The device is configured for implementing the examples described above and optional embodiments, the similarities of which will not be described in detail herein. As used below, the term "module" can be a combination of software and/or hardware that implements preset functions. While the apparatus described in the following example is preferably implemented through software, it is possible and conceivable that the apparatus is implemented through hardware, or a combination of the software and the hardware.

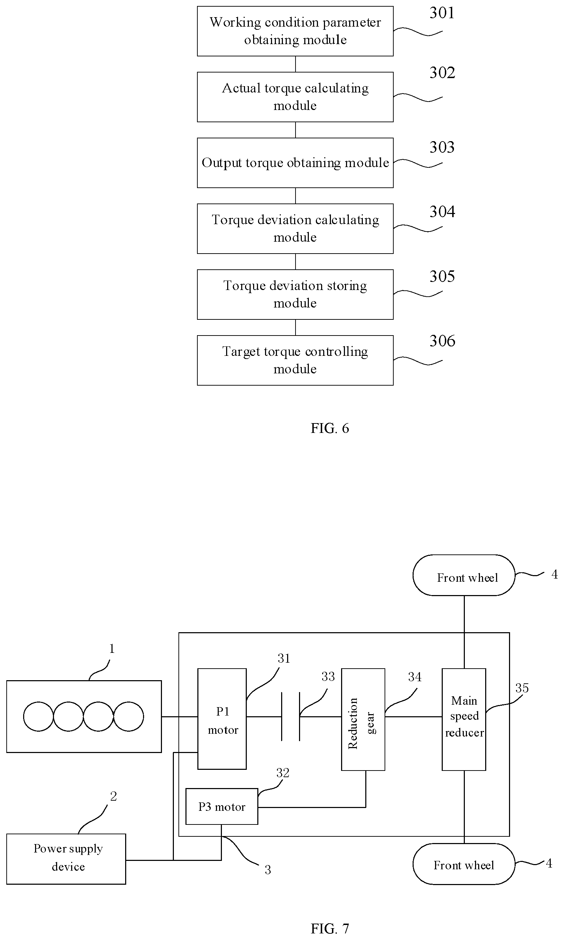

An example provides an apparatus for controlling a torque of a hybrid electric vehicle. As shown in FIG. 6, the device includes:
a working condition parameter obtaining module 301 configured to, obtain working condition parameters of power sources, where the power sources include an engine, a P1 motor and a P3 motor;
an actual torque calculating module 302 configured to, calculate, when a target power source with a working condition parameter satisfying corresponding preset detection conditions exists in the power sources, a target actual torque of the target power source;
an output torque obtaining module 303 configured to, obtain a current output torque fed back by the target power source;
a torque deviation calculating module 304 configured to, obtain a torque deviation of the target power source at a current operating rotational speed and the current output torque based on a difference between the target actual torque and the current output torque;
a torque deviation storing module 305 configured to, store the torque deviation in a torque precision look-up table corresponding to the target power source, where the torque precision look-up table is configured for storing torque deviations of the target power source at different operating rotational speeds and torques; and
a target torque controlling module 306 configured to, control a torque of the target power source based on the torque precision look-up table.

In some optional embodiments, in the actual torque calculating module 302, preset detection conditions corresponding to the P3 motor include at least one of the following: an operating temperature of the P3 motor being within a first preset temperature range; a voltage of the P3 motor being within a first preset voltage range; a current of the P3 motor being within a first preset current range; an operating rotational speed of the P3 motor being within a first preset rotation speed range; and an output torque fed back by the P3 motor being within a first preset torque range.

In some optional embodiments, the actual torque calculating module 302 includes:
a first power obtaining unit configured to, obtain a first output power of a power supply device and a first electric power of a target electric device when a working condition parameter of the P3 motor satisfies corresponding preset detection condition and the P1 motor is in an inactive state;
a first power calculating unit configured to, obtain a first motor power of the P3 motor based on a difference between the first output power and the first electric power;
a first data obtaining unit configured to, obtain a first motor efficiency of the P3 motor and a first operating rotational speed of the P3 motor; and
a first torque correcting unit configured to, calculate a target actual torque of the P3 motor based on the first motor power, the first motor efficiency, and the first operating rotational speed.

In some optional embodiments, in the actual torque calculating module 302, preset detection conditions corresponding to the P1 motor include at least one of the following: an operating temperature of the P1 motor being within a second preset temperature range; a voltage of the P1 motor being within a second preset voltage range; a current of the P1 motor being within a second preset current range; an operating rotational speed of the P1 motor being within a second preset rotation speed range; and an output torque fed back by the P1 motor being within a second preset torque range.

In some optional embodiments, the actual torque calculating module 302 further includes:
a second power obtaining unit configured to, obtain a second output power of a power supply device and a second electric power of a target electric device when a working condition parameter of the P1 motor satisfies corresponding preset detection conditions;
a second power calculating unit configured to, obtain a total motor power based on a difference between the second output power and the second electric power;
a third power calculating unit configured to, obtain a second motor power of the P3 motor;
a fourth power calculating unit configured to, obtain a third motor power of the P1 motor based on a difference between the total motor power and the second motor power;
a second data obtaining unit configured to, obtain a second motor efficiency of the P1 motor and a second operating rotational speed of the P1 motor; and
a second torque correcting unit configured to, calculate a target actual torque of the P1 motor based on the third motor power, the second motor efficiency, and the second operating rotational speed.

Further, the third power calculating unit includes:
a motor data obtaining sub-unit configured to, obtain a first output torque fed back by the P3 motor and a third operating rotational speed of the P3 motor;
a torque precision look-up sub-unit configured to, query a first torque deviation of the P3 motor from a torque precision look-up table corresponding to the P3 motor based on the first output torque and the third operating rotational speed;
an actual torque calculating sub-unit configured to, obtain a first actual torque of the P3 motor based on a sum of the first output torque and the first torque deviation;
a motor efficiency obtaining sub-unit configured to, obtain a third motor efficiency of the P3 motor; and
a motor power calculating sub-unit configured to, calculate the second motor power based on the first actual torque, the third motor efficiency, and the third operating rotational speed.

In some optional embodiments, in the actual torque calculating module 302, preset detection conditions corresponding to the engine include at least one of the following: an operating temperature of the engine being within a third preset temperature range, an ignition angle intervention being in an inactive state, the engine having no fault, an operating rotational speed of the engine being within a third preset rotation speed range, and an output torque fed back by the engine being within a third preset torque range.

In some optional embodiments, the actual torque calculating module 302 further includes:
a third data obtaining unit configured to, obtain a second output torque fed back by the P1 motor and a fourth operating rotational speed of the P1 motor when a working condition parameter of the engine satisfies corresponding preset detection conditions;
a torque precision look-up unit configured to, query a second torque deviation of the P1 motor from a torque precision look-up table corresponding to the P1 motor based on the second output torque and the fourth operating rotational speed;
a third torque correcting unit configured to, obtain a second actual torque of the P1 motor based on a sum of the second output torque and the second torque deviation; and
an actual torque converting unit configured to, calculate a target actual torque of the engine based on a speed ratio of the P1 motor to the engine and the second actual torque.

In some optional embodiments, the torque deviation storing module 305 includes:
a continuous duration obtaining unit configured to, obtain a continuous duration for which the target power source satisfies the corresponding preset detection conditions; and
a torque deviation storing unit configured to, store the torque deviation in the torque precision look-up table corresponding to the target power source when the continuous duration is greater than a target detection duration.

Further functional descriptions of the above modules and units are the same as those of the above corresponding examples, which will not be repeated herein.

The apparatus for controlling a torque of a hybrid electric vehicle in the example is presented in form of a functional unit. The unit is an application specific integrated circuit (ASIC), a processor and a memory for executing one or more pieces of software or fixed programs, and/or a different device capable of providing the above functions.

A hybrid electric vehicle is further provided in the examples of the present disclosure. The hybrid electric vehicle is a P13-configuration hybrid electric vehicle.

As shown in FIG. 7, the hybrid electric vehicle includes an engine 1, a power supply device 2, a transmission 3, and a vehicle controller (not shown in the figure). The transmission 3 includes a P1 motor 31, a P3 motor 32, a clutch 33, a reduction gear 34, and a main speed reducer 35. Specifically, the engine 1 is configured to, provide a drive force for the hybrid electric vehicle. The power supply device 2 is connected to the P1 motor 31 and the P3 motor 32. The power supply device 2 is configured to, supply power to the P1 motor 31 and the P3 motor 32. The P1 motor 31 is provided on a crankshaft of the engine 1 and is located between the engine 1 and the clutch 33. The P1 motor 31 is configured to, assist in starting the engine 1. The P3 motor 32 is connected to the reduction gear 34 and is provided at an output end of the transmission 3. The P3 motor 32 is configured to, provide a torque when the hybrid electric vehicle runs at a high speed. The main speed reducer 35 is connected to the clutch 33 through the reduction gear 34 and is provided between two front wheels 4 of the hybrid electric vehicle.

It is to be noted that the transmission 3 in the example is a dedicated hybrid transmission (DHT).

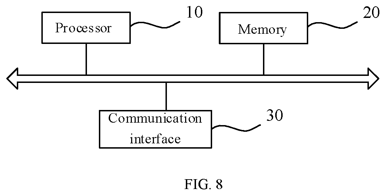

With reference to FIG. 8, FIG. 8 is a structural block diagram of a vehicle controller according to an optional example of the present disclosure. As shown in FIG. 8, the vehicle controller includes: one or more processors 10, a memory 20, and interfaces configured to, be connected to all components and including a high-speed interface and a low-speed interface. All the components are communicatively connected to each other through different buses and may be mounted on a common motherboard or in other manners as required. The processor may process an instruction executed in the vehicle controller, including an instruction stored in or on the memory to display graphical information of a graphical user interface (GUI) on an external input/output apparatus (such as a display device coupled to the interface). In some optional embodiments, a plurality of processors and/or buses may be used along with a plurality of memories as required. Similarity, a plurality of vehicle controllers may be connected. Each vehicle controller provides some necessary operations (for example, as a server array, a blade server set, or a multiprocessor system). One processor 10 is illustrated in FIG. 8.

The processor 10 may be a central processing unit, a network processing unit, or their combination. The processor 10 may further include a hardware chip. The hardware chip may be an application specific integrated circuit, a programmable logic device, or their combinations. The programmable logic device may be a complex programmable logic device, a field programmable logic gate array, a universal array logic, or their any combinations.

The memory 20 stores an instruction executable by at least one processor 10 to cause the at least one processor 10 to perform the method provided by the example.

The memory 20 may include a program storage area and a data storage area. The program storage area may store an operation system and an application program required by at least one function. The data storage area may store data created from the use of the vehicle controller, etc. Moreover, the memory 20 may include a high-speed random access memory, and a non-transitory memory, such as at least one magnetic disk storage device, a flash memory device, or other non-transitory solid-state storage devices. In some optional embodiments, the memory 20 may optionally include a memory remotely arranged with respect to the processor 10, and the remote memory may be connected to the vehicle controller by means of a network. The instances of the network include, but are not limited to, the Internet, an intranet, a local area network, a mobile communication network, and their combinations.

The memory 20 may include a volatile memory, such as random access memory. The memory may also include a nonvolatile memory, such as a flash memory, a hard disk or a solid state disk. The memory 20 may also include combinations of the above types of memories.

The vehicle controller further includes a communication interface 30 for the vehicle controller to communicate with other apparatuses, a communication network or a cloud.

An example of the present disclosure further provides a computer-readable storage medium. The method according to the examples of the present disclosure may be implemented in hardware, firmware, or implemented to be recordable in a storage medium, or implemented to be a computer code originally stored in a remote storage medium or a non-transitory machine-readable medium downloaded over a network and stored in a local storage medium, such that the method described herein can be processed by such software stored in the storage medium using a general purpose computer, a special purpose processor, or programmable or dedicated hardware. The storage medium may be a magnetic disk, an optical disk, a read-only memory, a random access memory, a flash memory, a hard disk or a solid state disk, etc. Further, the storage medium may further include a combination of the above types of memories. It can be understood that a computer, a processor, a microprocessor control device, or programmable hardware includes a storage assembly that may store or receive software or a computer code. When accessed and executed by a computer, a processor, or hardware, the software or the computer code implements the method according to the above examples.

Although the examples of the present disclosure have been described in conjunction with the accompanying drawings, various modifications and variations may be made by those skilled in the art without departing from the spirit and scope of the present disclosure, and such modifications and variations fall within the scope defined by the appended claims.

## Claims

1. A method for controlling a torque of a hybrid electric vehicle, **characterized by** comprising:
obtaining working condition parameters of power sources, wherein the power sources comprise an engine, a P1 motor and a P3 motor;
calculating, when a target power source with a working condition parameter satisfying corresponding preset detection conditions exists in the power sources, a target actual torque of the target power source;
obtaining a current output torque fed back by the target power source;
obtaining a torque deviation of the target power source at a current operating rotational speed and the current output torque based on a difference between the target actual torque and the current output torque;
storing the torque deviation in a torque precision look-up table corresponding to the target power source, wherein the torque precision look-up table is configured for storing torque deviations of the target power source at different operating rotational speeds and torques; and
controlling a torque of the target power source based on the torque precision look-up table.

2. The method for controlling a torque of a hybrid electric vehicle according to claim 1, **characterized in that**, calculating, when a target power source with a working condition parameter satisfying corresponding preset detection conditions exists in the power sources, a target actual torque of the target power source comprises:
obtaining a first output power of a power supply device and a first electric power of a target electric device when a working condition parameter of the P3 motor satisfies corresponding preset detection conditions and the P1 motor is in an inactive state;
obtaining a first motor power of the P3 motor based on a difference between the first output power and the first electric power;
obtaining a first motor efficiency of the P3 motor and a first operating rotational speed of the P3 motor; and
calculating a target actual torque of the P3 motor based on the first motor power, the first motor efficiency, and the first operating rotational speed.

3. The method for controlling a torque of a hybrid electric vehicle according to claim 1, **characterized in that**, calculating, when a target power source with a working condition parameter satisfying corresponding preset detection conditions exists in the power sources, a target actual torque of the target power source further comprises:
obtaining a second output power of a power supply device and a second electric power of a target electric device when working a condition parameter of the P1 motor satisfies corresponding preset detection conditions;
obtaining a total motor power based on a difference between the second output power and the second electric power;
obtaining a second motor power of the P3 motor;
obtaining a third motor power of the P1 motor based on a difference between the total motor power and the second motor power;
obtaining a second motor efficiency of the P1 motor and a second operating rotational speed of the P1 motor; and
calculating a target actual torque of the P1 motor based on the third motor power, the second motor efficiency, and the second operating rotational speed.

4. The method for controlling a torque of a hybrid electric vehicle according to claim 3, **characterized in that**, the obtaining second motor power of the P3 motor comprises:
obtaining a first output torque fed back by the P3 motor and a third operating rotational speed of the P3 motor;
querying a first torque deviation of the P3 motor from a torque precision look-up table corresponding to the P3 motor based on the first output torque and the third operating rotational speed;
obtaining a first actual torque of the P3 motor based on a sum of the first output torque and the first torque deviation;
obtaining a third motor efficiency of the P3 motor; and
calculating the second motor power based on the first actual torque, the third motor efficiency, and the third operating rotational speed.

5. The method for controlling a torque of a hybrid electric vehicle according to claim 1, **characterized in that**, the calculating, when a target power source with a working condition parameter satisfying corresponding preset detection conditions exists in the power sources, a target actual torque of the target power source further comprises:
obtaining a second output torque fed back by the P1 motor and a fourth operating rotational speed of the P1 motor when a working condition parameter of the engine satisfies corresponding preset detection conditions;
querying a second torque deviation of the P1 motor from a torque precision look-up table corresponding to the P1 motor based on the second output torque and the fourth operating rotational speed;
obtaining a second actual torque of the P1 motor based on a sum of the second output torque and the second torque deviation; and
calculating a target actual torque of the engine based on a speed ratio of the P1 motor to the engine and the second actual torque.

6. The method for controlling a torque of a hybrid electric vehicle according to claim 1, **characterized in that**, storing the torque deviation in a torque precision look-up table corresponding to the target power source comprises:
obtaining a continuous duration for which the target power source satisfies the corresponding preset detection conditions; and
storing the torque deviation in the torque precision look-up table corresponding to the target power source when the continuous duration is greater than a target detection duration.

7. The method for controlling a torque of a hybrid electric vehicle according to claim 1, **characterized in that**, preset detection conditions corresponding to the P3 motor comprise at least one of the following:
an operating temperature of the P3 motor being within a first preset temperature range;
a voltage of the P3 motor being within a first preset voltage range;
a current of the P3 motor being within a first preset current range;
an operating rotational speed of the P3 motor being within a first preset rotation speed range; and
an output torque fed back by the P3 motor being within a first preset torque range.

8. The method for controlling a torque of a hybrid electric vehicle according to claim 1, **characterized in that**, preset detection conditions corresponding to the P1 motor comprise at least one of the following:
an operating temperature of the P1 motor being within a second preset temperature range;
a voltage of the P1 motor being within a second preset voltage range;
a current of the P1 motor being within a second preset current range;
an operating rotational speed of the P1 motor being within a second preset rotation speed range; and
an output torque fed back by the P1 motor being within a second preset torque range.

9. The method for controlling a torque of a hybrid electric vehicle according to claim 1, **characterized in that**, preset detection conditions corresponding to the engine comprise at least one of the following:
an operating temperature of the engine being within a third preset temperature range;
an ignition angle intervention being in an inactive state;
the engine having no fault;
an operating rotational speed of the engine being within a third preset rotational speed range; and
an output torque fed back by the engine is within a third preset torque range.

10. An apparatus for controlling a torque of a hybrid electric vehicle, **characterized by** comprising:
a working condition parameter obtaining module configured to, obtain working condition parameters of power sources, wherein the power sources comprise an engine, a P1 motor and a P3 motor;
an actual torque calculating module configured to, calculate, when a target power source with a working condition parameter satisfying corresponding preset detection conditions exists in the power sources, a target actual torque of the target power source;
an output torque obtaining module configured to, obtain a current output torque fed back by the target power source;
a torque deviation calculating module configured to, obtain a torque deviation of the target power source at a current operating rotational speed and the current output torque based on a difference between the target actual torque and the current output torque;
a torque deviation storing module configured to, store the torque deviation in a torque precision look-up table corresponding to the target power source, wherein the torque precision look-up table is configured for storing torque deviations of the target power source at different operating rotational speeds and torques; and
a target torque controlling module configured to, control a torque of the target power source based on the torque precision look-up table.

11. The apparatus for controlling a torque of a hybrid electric vehicle according to claim 10, **characterized in that**, the actual torque calculating module comprises:
a first power obtaining unit configured to, obtain a first output power of a power supply device and a first electric power of a target electric device when a working condition parameter of the P3 motor satisfies corresponding preset detection conditions and the P1 motor is in an inactive state;
a first power calculating unit configured to, obtain a first motor power of the P3 motor based on a difference between the first output power and the first electric power;
a first data obtaining unit configured to, obtain a first motor efficiency of the P3 motor and a first operating rotational speed of the P3 motor; and
a first torque correcting unit configured to, calculate a target actual torque of the P3 motor based on the first motor power, the first motor efficiency, and the first operating rotational speed.

12. The apparatus for controlling a torque of a hybrid electric vehicle according to claim 10, **characterized in that**, the actual torque calculating module further comprises:
a second power obtaining unit configured to, obtain a second output power of a power supply device and a second electric power of a target electric device when a working condition parameter of the P1 motor satisfies corresponding preset detection conditions;
a second power calculating unit configured to, obtain a total motor power based on a difference between the second output power and the second electric power;
a third power calculating unit configured to, obtain a second motor power of the P3 motor;
a fourth power calculating unit configured to, obtain a third motor power of the P1 motor based on a difference between the total motor power and the second motor power;
a second data obtaining unit configured to, obtain a second motor efficiency of the P1 motor and a second operating rotational speed of the P1 motor; and
a second torque correcting unit configured to, calculate a target actual torque of the P1 motor based on the third motor power, the second motor efficiency, and the second operating rotational speed.

13. The apparatus for controlling a torque of a hybrid electric vehicle according to claim 12, **characterized in that**, the third power calculating unit comprises:
a motor data obtaining sub-unit configured to, obtain a first output torque fed back by the P3 motor and a third operating rotational speed of the P3 motor;
a torque precision look-up sub-unit configured to, query a first torque deviation of the P3 motor from a torque precision look-up table corresponding to the P3 motor based on the first output torque and the third operating rotational speed;
an actual torque calculating sub-unit configured to, obtain a first actual torque of the P3 motor based on a sum of the first output torque and the first torque deviation;
a motor efficiency obtaining sub-unit configured to, obtain a third motor efficiency of the P3 motor; and
a motor power calculating sub-unit configured to, calculate the second motor power based on the first actual torque, the third motor efficiency, and the third operating rotational speed.

14. The apparatus for controlling a torque of a hybrid electric vehicle according to claim 10, **characterized in that**, the actual torque calculating module further comprises:
a third data obtaining unit configured to, obtain a second output torque fed back by the P1 motor and a fourth operating rotational speed of the P1 motor when a working condition parameter of the engine satisfies corresponding preset detection conditions;
a torque precision look-up unit configured to, query a second torque deviation of the P1 motor from a torque precision look-up table corresponding to the P1 motor based on the second output torque and the fourth operating rotational speed;
a third torque correcting unit configured to, obtain a second actual torque of the P1 motor based on a sum of the second output torque and the second torque deviation; and
an actual torque converting unit configured to, calculate a target actual torque of the engine based on a speed ratio of the P1 motor to the engine and the second actual torque.

15. The apparatus for controlling a torque of a hybrid electric vehicle according to claim 10, **characterized in that**, the torque deviation storing module comprises:
a continuous duration obtaining unit configured to, obtain a continuous duration for which the target power source satisfies the corresponding preset detection conditions; and
a torque deviation storing unit configured to, store the torque deviation in the torque precision look-up table corresponding to the target power source when the continuous duration is greater than target detection duration.

16. The apparatus for controlling a torque of a hybrid electric vehicle according to claim 10, **characterized in that**, in the actual torque calculating module, preset detection conditions corresponding to the P3 motor comprises at least one of the following:
an operating temperature of the P3 motor being within a first preset temperature range;
a voltage of the P3 motor being within a first preset voltage range;
a current of the P3 motor being within a first preset current range;
an operating rotational speed of the P3 motor being within a first preset rotation speed range; and
an output torque fed back by the P3 motor being within a first preset torque range.

17. The apparatus for controlling a torque of a hybrid electric vehicle according to claim 10, **characterized in that**, in the actual torque calculating module, preset detection conditions corresponding to the P1 motor comprises at least one of the following:
an operating temperature of the P1 motor being within a second preset temperature range;
a voltage of the P1 motor being within a second preset voltage range;
a current of the P1 motor being within a second preset current range;
an operating rotational speed of the P1 motor being within a second preset rotation speed range; and
an output torque fed back by the P1 motor being within a second preset torque range.

18. The apparatus for controlling a torque of a hybrid electric vehicle according to claim 10, **characterized in that**, in the actual torque calculating module, preset detection conditions corresponding to the engine comprises at least one of the following:
an operating temperature of the engine being within a third preset temperature range;
an ignition angle intervention being in an inactive state;
the engine having no fault;
an operating rotational speed of the engine being within a third preset rotation speed range; and
an output torque fed back by the engine being within a third preset torque range.

19. A hybrid electric vehicle, **characterized by** comprising:
an engine configured to, provide a driving force for the hybrid electric vehicle;
a P1 motor provided on a crankshaft of the engine;
a P3 motor provided at an output end of a transmission; and
a vehicle controller connected to the engine, the P1 motor, and the P3 motor, configured to execute the method for controlling a torque of a hybrid electric vehicle according to any one of claims 1-9.

20. A computer-readable storage medium, **characterized in that**, computer instructions are stored on the computer-readable storage medium, and the computer instructions being configured to, cause a computer to execute the method for controlling a torque of a hybrid electric vehicle according to any one of claims 1-9.
